# EUROPÄISCHE PATENTANMELDUNG

(11) **EP 3 739 705 A1**
(43) Veröffentlichungstag der Anmeldung: **18.11.2020**
(21) Anmeldenummer: 19175084.3
(22) Anmeldetag: 17.05.2019
(51) Int. Cl.: H02H 3/087, H02H 9/00, H02J 7/34

(54) **VERFAHREN UND VORRICHTUNG ZUM EINSCHALTEN EINER KAPAZITIVEN LASTANORDNUNG AN EIN GLEICHSTROMNETZ**

(71) Anmelder: Siemens Aktiengesellschaft, 80333 München (DE)
(72) Erfinder: Behringer, Klaus, 91338 Igensdorf (DE); Feil, Wolfgang, 92421 Schwandorf (DE); Kaluza, Peter, 92286 Rieden (DE); Meier, Matthias, 92284 Poppenricht (DE)

(57) **Zusammenfassung**

Die Erfindung betrifft ein Verfahren zum Einschalten einer kapazitiven Lastanordnung (10) an ein Gleichstromnetz (1), wobei die Lastanordnung (10) durch eine Steuereinheit (20) über ein steuerbares Schaltelement (25) mit einem Versorgungspotential des Gleichstromnetzes (1) verbindbar ist. Das steuerbare Schaltelement (25) wird durch die Steuereinheit (20) periodisch ein- und ausgeschaltet. Mittels einer Strommesseinrichtung (26) wird die Höhe der während einer jeweiligen Einschaltphase des steuerbaren Schaltelements (25) durch das steuerbare Schaltelement (25) fließenden Strompulse erfasst. Dabei wird die zeitliche Entwicklung der Höhe von zumindest zwei unmittelbar aufeinanderfolgenden Strompulsen durch die Steuereinheit (20) ausgewertet. Das steuerbare Schaltelement (25) wird durch die Steuereinheit (20) weiter periodisch ein- und ausgeschaltet, wenn eine vorbestimmte Änderung in der zeitlichen Entwicklung der Höhe der zumindest zwei aufeinanderfolgenden Strompulse ermittelt wird.

## Beschreibung

Die Erfindung betrifft ein Verfahren und eine Vorrichtung zum Einschalten einer kapazitiven Lastanordnung an ein Gleichstromnetz.

Lastanordnungen, die einen oder mehrere kapazitive Verbraucher umfassen und aus einem Gleichstromnetz (DC-Netz) versorgt werden, kommen insbesondere im industriellen Umfeld zum Einsatz. Die Versorgung von Lastanordnungen aus Gleichstromnetzen bietet den Vorteil, durch intelligente Netzsteuerung und integrierte Speicher flexibel und robust auf schwankende Netzqualität und Energieangebote reagieren zu können. Insbesondere können regenerative Energieerzeuger, wie zum Beispiel Batteriespeicher und/oder Photovoltaikanlagen leicht in ein Gleichstromnetz eingebunden werden. Wandlungsverluste von Wechsel- in Gleichspannung können dabei vermieden werden. Durch die Möglichkeit, Bremsenergie, zum Beispiel von generatorisch betriebenen Antrieben, puffern zu können, ergeben sich Energieeinsparungen.

Die Verteilung der Energie in einem Gleichstromnetz erfolgt wie in den bislang verwendeten Wechselstromnetzen. Während in Wechselstromnetzen üblicherweise induktive Lastanordnungen dominieren, finden sich in Gleichstromnetzen überwiegend Lastanordnungen mit einem oder mehreren kapazitiven Verbrauchern. Dies hat zur Folge, dass beim Einschalten der kapazitiven Lastanordnung an das Gleichstromnetz sehr hohe Ströme fließen, welche nach Möglichkeit vermieden werden sollen. Bislang werden daher kapazitive Lastanordnungen über Einschaltwiderstände, welche parallel zu einem steuerbaren Einschaltelement verschaltet sind, vorgesehen, um den Einschaltstrom begrenzen zu können. Die Einschaltwiderstände werden dann im laufenden Betrieb weggeschalten. Alternativ kann man diese Einschaltwiderstände in Serie zu einem steuerbaren Einschaltelement schalten. Für den laufenden Betrieb werden die Einschaltwiderstände dann überbrückt. Da der Einschaltwiderstand ein zusätzliches steuerbares Schaltelement erfordert, ist dies mit Kosten verbunden.

Es ist Aufgabe der Erfindung, ein Verfahren und eine Vorrichtung zum Einschalten einer kapazitiven Lastanordnung an ein Gleichstromnetz anzugeben, welche funktionell und/oder baulich verbessert sind.

Diese Aufgaben werden gelöst durch ein Verfahren gemäß den Merkmalen des Anspruchs 1, ein Computerprogrammprodukt gemäß den Merkmalen des Anspruchs 9 sowie eine Vorrichtung gemäß den Merkmalen des Anspruchs 10. Vorteilhafte Ausgestaltungen ergeben sich aus den abhängigen Ansprüchen.

Gemäß einem ersten Aspekt wird ein Verfahren zum Einschalten einer kapazitiven Lastanordnung an ein Gleichstromnetz vorgeschlagen. Unter einer kapazitiven Lastanordnung wird eine Lastanordnung verstanden, die einen oder mehrere kapazitive Verbraucher umfasst. Solche kapazitiven Verbraucher sind beispielsweise Wechselrichter, welche aus der vom Gleichstromnetz bereitgestellten Gleichspannung eine Wechselspannung für einen Verbraucher, zum Beispiel einen Motor, erzeugen. Derartige Wechselrichter weisen in der Regel eine oder mehrere Kapazitäten zu deren Betrieb auf.

Die Lastanordnung ist durch eine Steuereinheit über ein steuerbares Schaltelement mit einem Versorgungspotential des Gleichstromnetzes verbindbar. Die Steuereinheit weist hierzu eine Recheneinheit sowie einen Speicher auf, in dem zur Durchführung des erfindungsgemäßen Verfahrens erforderliche Programme und/oder Parameter und/oder Kennlinien gespeichert sind. Der Speicher kann ferner dazu genutzt werden, während des Betriebs der Steuereinheit anfallende Informationen zwischenzuspeichern.

Als steuerbare Schaltelemente kommen insbesondere leistungselektronische Bauelemente in Betracht. Dies können beispielsweise FETs (Feldeffekttransistoren) oder IGBTs (Insulated Gate Bipolar Transistor) sein. Ein steuerbares Schaltelement kann dabei ein oder mehrere leistungselektronische Bauelemente umfassen. Diese können vom n-Kanal-Typ oder vom p-Kanal-Typ bzw. npn- oder pnp-Typ sein.

Im Rahmen des Verfahrens wird das steuerbare Schaltelement durch die Steuereinheit periodisch ein- und ausgeschaltet. Hierzu erzeugt die Steuereinheit ein entsprechendes Ansteuersignal, um das steuerbare Schaltelement wiederholt abwechselnd leitend und sperrend zu schalten. Mittels einer Strommesseinrichtung wird die Höhe der während einer jeweiligen Einschaltphase des steuerbaren Schaltelements durch das steuerbare Schaltelement fließenden Strompulse erfasst. Anschließend wird die zeitliche Entwicklung der Höhe von zumindest zwei unmittelbar (zeitlich) aufeinander folgenden Strompulsen durch die Steuereinheit ausgewertet. Wenn eine vorbestimmte Änderung in der zeitlichen Entwicklung der Höhe der zumindest zwei aufeinanderfolgenden Strompulse ermittelt wird, wird das steuerbare Schaltelement durch die Steuereinheit weiter periodisch ein- und ausgeschaltet.

Mittels des erfindungsgemäßen Verfahrens erfolgt unter Verwendung einer Kombination aus dem steuerbaren Schaltelement und einer Strommesseinrichtung ein periodisches und überwachtes Ein- und Ausschalten des steuerbaren Schaltelements, wodurch eine Laderampe für die kapazitiven Elemente der Lastanordnung realisierbar ist. Da beim ersten Einschalten und der Auswertung der Höhe des ersten Strompulses noch nicht festgestellt werden kann, ob es sich aufgrund der Höhe des Strompulses um eine Aufschaltung auf einen Kurzschluss oder die Verbindung eines großen kapazitiven Verbrauchers der Lastanordnung mit dem Gleichstromnetz handelt, wird durch das Auswerten einer Mehrzahl von (zeitlich) aufeinanderfolgenden Strompulsen die Bestimmung möglich, wie sich die Strompulse, abhängig vom Ladezustand der kapazitiven Lastanordnung, zeitlich verändern. Dadurch kann eine stufenweise Erhöhung der Spannung der kapazitiven Lastanordnung bzw. des kapazitiven Verbrauchers der kapazitiven Lastanordnung erzielt werden.

Im Ergebnis ist es möglich, das Gleichstromnetz mit seiner Lastanordnung über die zur Stromüberwachung ohnehin vorhandene Strommesseinrichtung in Betrieb zu nehmen. Eine Absicherung für einen Kurzschlussfall sowie ein Schaltorgan für das Ein- und Ausschalten der Lastanordnung können durch die Kombination aus steuerbarem Schaltelement und Strommesseinrichtung realisiert werden. Diese Kombination kann gegebenenfalls als Baueinheit vorgesehen werden. Ein weiterer Vorteil besteht darin, dass über den nunmehr nicht mehr benötigten Einschaltwiderstand Verlustleistung vermieden werden kann.

Da eine digitale Signalverarbeitung der Höhe der Strompulse durch die Steuereinheit erfolgt, welche gleichzeitig für die Ansteuerung des steuerbaren Schaltelements zuständig ist, kann das Gleichstromnetz betriebsmäßig eingeschaltet und gleichzeitig geschützt werden. Zudem können einem übergeordneten Leitsystem von der Steuereinheit Messwerte im regulären Betrieb zur Verfügung gestellt werden.

Gemäß einer zweckmäßigen Ausgestaltung wird das steuerbare Schaltelement durch die Steuereinheit periodisch ein- und ausgeschaltet, bis die Höhe eines Strompulses einen vorgegebenen Stromwert unterschreitet. Diese Ausgestaltung betrifft den Fall, in dem die vorbestimmte Änderung in der zeitlichen Entwicklung der Stromhöhe der zumindest zwei aufeinanderfolgenden Strompulse festgestellt wird bzw. wurde. Dieses Vorgehen ergibt sich dadurch, dass mit jedem Strompuls der kapazitive Verbraucher der Lastanordnung weiter aufgeladen wird, so dass die über ihm abfallende Spannung ansteigt. Dadurch wird, sofern kein Fehler in dem Gleichstromnetz vorliegt, der über die Strommesseinrichtung fließende Strom mit jedem weiteren Strompuls kleiner, bis dieser den vorgegebenen Stromwert unterschreitet. Das Unterschreiten des Stromwerts signalisiert, dass der kapazitive Verbraucher der Lastanordnung ausreichend bzw. vollständig aufgeladen ist. Dann wird das steuerbare Schaltelement durch die Steuereinheit nach Erreichen des vorgegebenen Stromwerts dauerhaft leitend geschaltet. Ein das Netzwerk belastender Strompuls tritt hier nicht mehr auf.

Es ist weiterhin zweckmäßig, wenn das steuerbare Schaltelement durch die Steuereinheit sperrend geschaltet wird, wenn die vorbestimmte Änderung in der zeitlichen Entwicklung der Höhe der zumindest zwei unmittelbar aufeinanderfolgenden Strompulse nicht ermittelt wird. Insbesondere wird das steuerbare Schaltelement durch die Steuereinheit sperrend geschaltet, wenn in der zeitlichen Entwicklung der Höhe der zumindest zwei unmittelbar aufeinanderfolgenden Strompulse eine gleiche oder eine nahezu gleiche Höhe der Strompulse ermittelt wird. Ändern sich die Strompulse nicht (d. h. die vorbestimmte Änderung liegt nicht vor), so wird von einem Kurzschluss ausgegangen. In diesem Fall wird das steuerbare Schaltelement durch die Steuereinheit sperrend geschaltet.

Eine weitere zweckmäßige Ausgestaltung sieht vor, dass zusätzlich mittels einer Spannungsmesseinrichtung die über die Lastanordnung abfallende Spannung erfasst und die zeitliche Entwicklung der Spannung während der zumindest zwei aufeinanderfolgenden Strompulse durch die Steuereinheit ausgewertet wird. Gemäß dieser Ausgestaltung wird durch das Auswerten der Strompulse und des Spannungsverlaufs auf der Verbraucherseite festgestellt, wie sich die Strompulse abhängig vom Ladezustand der Lastanordnung ändern. Ändern sich die Strompulse nicht, d. h. die vorbestimmte Änderung ist nicht erfüllt, und erhöht sich die über dem Verbraucher ermittelte Spannung nicht, wird von einem Kurzschluss ausgegangen. Werden die Strompulse kleiner und wird gleichzeitig die über dem Verbraucher gemessene Spannung höher (d. h. die vorbestimmte Änderung ist erfüllt), wird davon ausgegangen, dass der kapazitive Verbraucher der Lastanordnung geladen wird.

Eine weitere Ausgestaltung sieht vor, dass die Dauer der Strompulse durch die Steuereinheit variiert wird. Insbesondere ist vorgesehen, dass die Dauer der Strompulse in der zeitlichen Abfolge verlängert wird. Abhängig von der Stromstärke und der zu schaltenden Kapazität wird gemäß dieser Ausgestaltung die Impulsdauer der Ladepulse verlängert, wodurch der Verlauf der Laderampe in gewünschter Weise beinflussbar ist.

Die Erfindung schlägt gemäß einem zweiten Aspekt ein Computerprogrammprodukt vor, das direkt in den internen Speicher einer digitalen Steuereinheit geladen werden kann und Softwarecodeabschnitte umfasst, mit denen die Schritte des hierin beschriebenen Verfahrens ausgeführt werden, wenn das Produkt auf der Steuereinheit läuft. Das Computerprogrammprodukt kann in der Gestalt eines Speichermediums, wie zum Beispiel eines USB-Speichersticks, einer DVD, einer CD-ROM oder einer Speicherkarte verkörpert sein. Das Computerprogrammprodukt kann auch in der Gestalt eines über eine drahtlose oder leitungsgebundene Kommunikationsverbindung ladbaren Signals vorliegen.

Gemäß einem dritten Aspekt der vorliegenden Erfindung wird eine Vorrichtung zum Einschalten einer kapazitiven Lastanordnung an ein Gleichstromnetz vorgeschlagen. Die Vorrichtung umfasst eine Steuereinheit, ein steuerbares Schaltelement, das durch die Steuereinheit ein- und ausschaltbar ist, sowie eine Strommesseinrichtung, die dazu ausgebildet ist, die Höhe des durch das steuerbare Schaltelement fließenden Stroms zu erfassen. Die Steuereinheit ist dazu ausgebildet, das steuerbare Schaltelement mittels eines Steuersignals periodisch ein- und auszuschalten. Die Steuereinheit ist weiter dazu ausgebildet, während einer jeweiligen Einschaltphase des steuerbaren Schaltelements von der Strommesseinrichtung eine die Höhe der durch das steuerbare Schaltelement fließenden Strompulse repräsentierende Stromhöheninformation zu empfangen. Die Steuereinheit ist ferner dazu ausgebildet, die zeitliche Entwicklung der Stromhöheninformation von zumindest zwei aufeinanderfolgenden Strompulsen auszuwerten und das steuerbare Schaltelement weiter periodisch ein- und auszuschalten, wenn eine vorbestimmte Änderung in der zeitlichen Entwicklung der Stromhöhe der zumindest zwei aufeinanderfolgenden Strompulse ermittelt wird.

Die erfindungsgemäße Vorrichtung weist die gleichen Vorteile auf, wie diese vorstehend in Verbindung mit dem erfindungsgemäßen Verfahren beschrieben wurden.

In zweckmäßigen Ausgestaltungen ist die Vorrichtung ferner zur Durchführung der Schritte des hierin beschriebenen Verfahrens ausgebildet.

Die Erfindung wird nachfolgend näher anhand eines Ausführungsbeispiels in der Zeichnung erläutert. Es zeigen:
- Fig. 1: eine schematische Darstellung eines beispielhaften Gleichstromnetzes, an das eine kapazitive Lastanordnung über ein steuerbares Schaltelement schaltbar ist;
- Fig. 2: ein elektrisches Ersatzschaltbild des Gleichstromnetzes im Einschaltmoment;
- Fig. 3: verschiedenen Strom- und Spannungsverläufe für verschiedene Einschaltfälle F1 bis F4; und
- Fig. 4: ein Ablaufdiagramm, das die Schritte des erfindungsgemäßen Verfahrens illustriert.

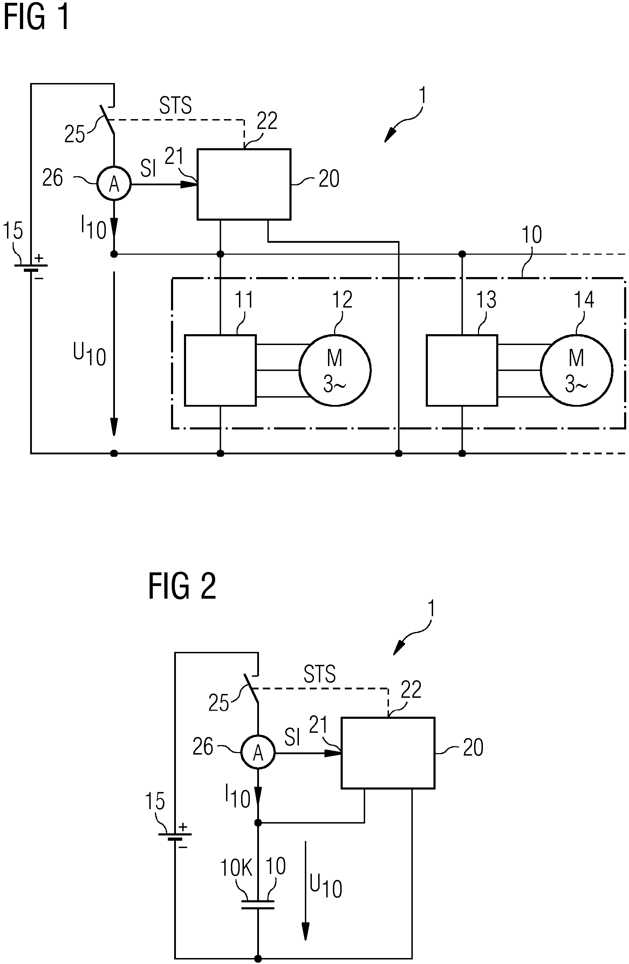

Fig. 1 zeigt eine schematische Darstellung eines Gleichstromnetzes 1 (DC-Netz), an das eine kapazitive Lastanordnung 10 schaltbar ist. Das Gleichstromnetz 1 stellt an Klemmen oder Versorgungsschienen eine Gleichspannung bereit. In der schematischen Darstellung wird die Gleichspannung beispielhaft von einer Batterie 15 bereitgestellt. Es versteht sich, dass die Batterie 15 lediglich stellvertretend für eine beliebige Energiequelle oder eine Kombination mehrerer Energiequellen steht, an deren Klemmen eine Gleichspannung bereitgestellt wird. Energiequellen können zum Beispiel eine Photovoltaikanlage und/oder ein Batteriespeicher, aber auch ein Gleichrichter sein, der die Gleichspannung durch Gleichrichtung einer von einer Wechselspannungsquelle erzeugten Wechselspannung erzeugt.

Die kapazitive Lastanordnung 10 (nachfolgend nur als Lastanordnung 10 bezeichnet) kann eine beliebige Anzahl an gleichen und/oder unterschiedlichen Verbrauchern umfassen. Wenigstens einer der Verbraucher ist jedoch kapazitiver Natur. Lediglich beispielhaft umfasst die Lastanordnung 10 im hier beschriebenen Ausführungsbeispiel zwei Wechselrichter 11, 13 an die jeweils dreiphasige Motoren 12, 14 angeschlossen sind. In bekannter Weise wandeln die Wechselrichter 11, 13 die von dem Gleichstromnetz bereitgestellte Gleichspannung in eine von den Motoren 12, 14 benötigte Dreh- bzw. Wechselspannung um. Die Wechselrichter 11, 13 weisen hierzu eine Anzahl an steuerbaren Schaltelementen (nicht dargestellt) sowie mindestens einen Kondensator auf (nicht dargestellt) und stellen die kapazitiven Verbraucher der Lastanordnung dar.

Die Lastanordnung 10 ist über ein steuerbares Schaltelement 25 mit einem Versorgungspotential des Gleichspannungsnetzes 1 verbindbar. Das steuerbare Schaltelement 25 kann hierzu von einer Steuereinheit 20 mittels eines an einem Ausgang 22 abgegebenen Steuersignals STS leitend geschaltet werden, wodurch der eine Anschluss der Lastanordnung 10 mit dem negativen Potential der Batterie 15 verbunden wird. Der andere Anschluss der Lastanordnung 10 ist in bekannter Weise mit dem positiven Potential der Batterie 15, das beispielsweise in Bezugspotential darstellt, verbunden.

Das steuerbare Schaltelement 25 ist ein leistungselektronisches Bauelement, zum Beispiel ein MOSFET, IGBT, usw.. Das Bauelement kann vom n- oder p-Kanal-Typ bzw. npn- oder pnp-Typ sein. Das Halbleitermaterial kann auf Silizium (Si) oder Galliumnitrid (GaN) oder ähnlichem basieren. Das steuerbare Schaltelement kann ein oder mehrere leistungselektronische Bauelemente der genannten Art umfassen; diese können insbesondere als Parallelschaltung vorliegen oder auch antiseriell verschalten sein.

Im Strompfad des steuerbaren Schaltelements 25 liegt lediglich beispielhaft zwischen dem steuerbaren Schaltelement 25 und der Lastanordnung 10 eine Strommesseinrichtung 26. Die Strommesseinrichtung 26 ist eine schnelle elektronische Strommesseinrichtung, die in der Lage ist, den durch das steuerbare Schaltelement 25 fließenden Strom im Mikrosekunden-Bereich abzutasten. Beispielsweise kann die Strommesseinrichtung als magnetoresistiver Sensor (sog. MR-Sensor) ausgebildet sein. Derartige Sensoren werden beispielsweise von der Firma Sensitec angeboten. Alternativ kann die Strommesseinrichtung 26 ein Sensor sein, der auf dem Hall-Prinzip basiert. Ein solcher hoch-integrierter Hall-Sensor ist z.B. in der EP 2 619 595 B1 beschrieben.

Obwohl in der schematischen Darstellung der Fig. 1 das steuerbare Schaltelement 25 und die Strommesseinrichtung 26 als getrennte Elemente dargestellt sind, können diese zum Zwecke der Durchführung des erfindungsgemäßen Verfahrens auch als Baueinheit vorliegen.

Die Strommesseinrichtung 26 erfasst den durch das steuerbare Schaltelement 25 fließenden Strom I₁₀, wobei eine, die Höhe des durch das steuerbare Schaltelement 25 fließenden Stroms repräsentierende, Stromhöheninformation SI der Steuereinheit 20 an einem Eingang 21 (Anschluss für Stromhöheninformation) zugeführt wird. Die Steuereinheit 20 ist unter anderem dazu ausgebildet, die Stromhöheninformation SI in einer nicht näher dargestellten Recheneinheit bestimmungsgemäß zu verarbeiten und basierend auf dem Ergebnis der Verarbeitung an dem Steuerausgang 22 das bereits erwähnte Steuersignal STS für das Schaltelement 25 auszugeben.

Aufgrund der kapazitiven Verbraucher (11, 13) der Lastanordnung 10 ergibt sich im Einschaltmoment das in Fig. 2 gezeigte vereinfachte Ersatzschaltbild. In diesem vereinfachten Ersatzschaltbild ist die Lastanordnung 10 durch einen Kondensator 10K, die die Kapazitäten der Wechselrichter 11, 13 repräsentiert, zusammengefasst. Während und nach dem Einschalten fällt dabei über dem Kondensator 10K die Spannung U₁₀ ab, welche in einer optionalen Ausgestaltung zusätzlich erfasst und der Steuereinheit 20 als auszuwertende Information zur Erzeugung des Steuersignals STS zugeführt werden kann.

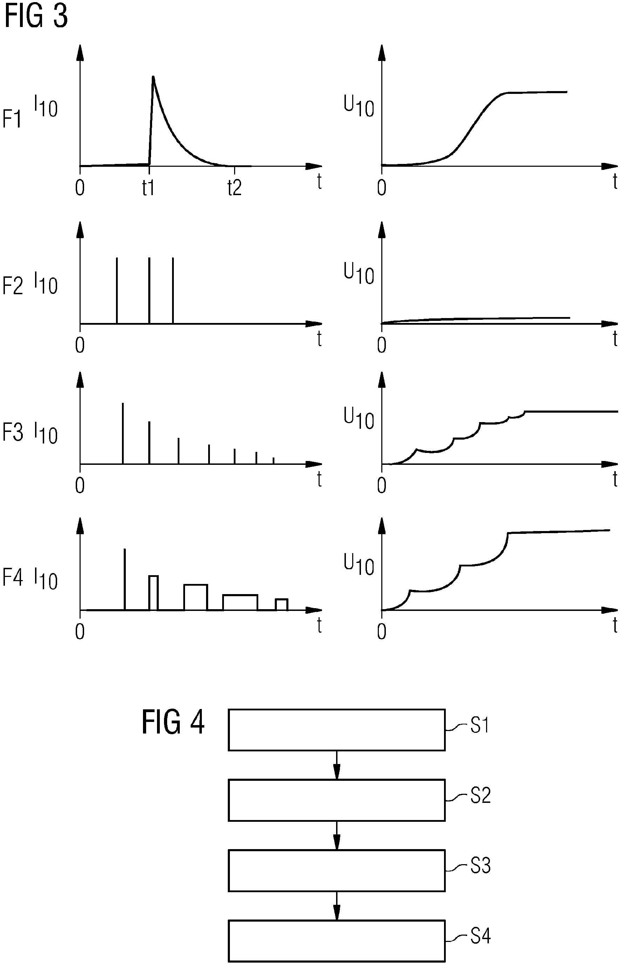

Zum Einschalten der Lastanordnung 10 an das Gleichstromnetz 1 wird das steuerbare Schaltelement 25 zunächst durch die Steuereinheit 20 mittels des Steuersignals STS periodisch ein- und ausgeschaltet (Schritt S1 in Fig. 4). Das periodische Ein- und Ausschalten des steuerbaren Schaltelements 25 umfasst hierbei, dass in äquidistanten Zeitabständen ein leitend Schalten des steuerbaren Schaltelements 25 mittels des von der Steuereinheit 20 abgegebenen Steuersignals STS erfolgt. Das periodische Ein- und Ausschalten erfolgt dabei derart, dass das steuerbare Schaltelement 25 gepulst ein- und ausgeschaltet wird, d.h. die Einschaltdauer des Schaltelements 25 ist wesentlich kürzer als die Sperrdauer des Schaltelements 25.

Die Strommesseinrichtung 26 erfasst (Schritt S2 in Fig. 4) während der (kurzen) leitenden Phase des Schaltelements den durch ihn fließenden Strom I₁₀. Für jeden durch das Leitendschalten resultierenden Strompuls wird die die Stromhöhe repräsentierende Stromhöheninformation SI an die Steuereinheit 20 zur Auswertung übertragen. Mit dem Empfang der ersten Stromhöheninformation SI kann die Steuereinheit 20 jedoch noch nicht feststellen, ob es sich aufgrund des Stromflusses I₁₀ um eine Aufschaltung auf einen Kurzschluss oder um das Aufladen der Kapazität 10K der Lastanordnung handelt.

Es erfolgt daher gemäß Schritt S3 (Fig. 4) das Auswerten der zeitlichen Entwicklung der Höhe von zumindest zwei unmittelbar aufeinander folgenden Strompulsen durch die Steuereinheit 20. Durch das Auswerten der Strompulse di/dt und optional des Verlaufs der über der Lastanordnung 10 Spannung U₁₀ kann durch die Steuereinheit 20 festgestellt werden, in welcher Weise sich die Strompulse abhängig vom Ladezustand der Kapazität 10K ändern.

Ändert sich die Höhe der Strompulse nicht, was sich in einer (betragsmäßig) im Wesentlichen gleichen oder nahezu gleichen Stromhöheninformation SI bemerkbar macht, muss von einem Kurzschluss ausgegangen werden. Werden die Strompulse in ihrer Höhe kleiner, was sich in entsprechend verkleinerten Beträgen der zeitlich aufeinander folgenden Stromhöheninformationen SI bemerkbar macht, kann davon ausgegangen werden, dass die Kapazität 10K der Lastanordnung 10 aufgeladen wird.

Wird in Schritt S4 (Fig. 4) nach einer Auswertung einer Mehrzahl von Stromhöheninformationen festgestellt, dass ein vorgegebener Stromwert unterschritten ist, so wird von einem vollständigen Aufladen des Kondensators 10K der Lastanordnung ausgegangen. Dann verändert die Steuereinheit 20 das Steuersignal STS derart, dass das steuerbare Schaltelement 25 dauerhaft leitend geschaltet wird.

Wenn demgegenüber im Schritt S4 nach einer Auswertung einer Mehrzahl von zeitlich aufeinanderfolgenden Stromhöheninformationen festgestellt wird, dass die Stromhöheninformation SI im Wesentlichen gleich oder nahezu gleich sind, so wird auf einen Kurzschluss geschlossen. Die Steuereinheit 20 verändert das Steuersignal STS dann derart, dass das steuerbare Schaltelement dauerhaft sperrend geschaltet ist.

Wie erwähnt, kann zusätzlich mittels der in den Figuren nicht dargestellten Spannungsmesseinrichtung die über die Lastanordnung abfallende Spannung U₁₀ erfasst und durch die Steuereinheit 20 zusätzlich die zeitliche Entwicklung der Spannung (d.h. der Spannungsverlauf) während der Mehrzahl der erfassten Strompulse ausgewertet werden.

Abhängig von der Stromstärke und der zu schaltenden Kapazität kann darüber hinaus die Impulsdauer der einzelnen Ladeimpulse variiert, insbesondere verlängert werden, um eine bestimmte Spannungsrampe zum Aufladen des Kondensators 10K der Lastanordnung 10 zu erhalten. Entsprechende Steuerinformation können vorab durch Versuche bestimmt und in Gestalt einer Kennlinie oder anderer Steuerinformationen in der Steuereinheit 20 hinterlegt sein.

Fig. 3 zeigt die eben beschriebenen Einschaltfälle mit der Ansteuerung des steuerbaren Schaltelements 25 durch die Steuereinheit 20 sowie die sich hieraus ergebenden zeitlichen Strom- und Spannungsverläufe. In Fig. 3 gehören nebeneinander angeordnete Strom- und Spannungsverläufe zueinander.

Im ersten Einschaltfall F1 ist eine Situation dargestellt, in der das Einschalten des steuerbaren Schaltelements 25 ohne die Anwendung des erfindungsgemäßen Verfahrens erfolgt. Es wird zu einem Zeitpunkt t1 das steuerbare Schaltelement 25 leitend geschaltet, wodurch eine Stromspitze entsteht. Auf der rechten Seite ist die über der Lastanordnung sich ab dem Zeitpunkt t1 aufbauende Spannung U₁₀ zu erkennen, wobei zum Zeitpunkt t2 der Kondensator 10K geladen ist, so dass die Spannung nicht mehr (wesentlich) ansteigt und der Strom auf nahezu 0 abklingt.

Im zweiten Einschaltfall F2 erfolgt ein gepulstes Ein- und Ausschalten des steuerbaren Schaltelements 25 durch die Steuereinheit 20. Dabei sind drei Strompulse dargestellt, welche in etwa die gleiche Höhe aufweisen und dadurch in einer in etwa gleichen Stromhöheninformation resultieren. Wie oben beschrieben, lässt die Auswertung, dass sich die Strompulse in ihrer Höhe nicht oder nicht signifikant ändern, den Schluss zu, dass ein Kurzschluss vorliegt. Bereits nach lediglich beispielhaft drei Strompulsen wird daher das steuerbare Schaltelement 25 durch die Steuereinheit 20 nicht mehr leitend geschaltet. Über dem Kondensator 10K der Lastanordnung 10 baut sich keine oder keine wesentliche Spannung auf.

Im dritten Einschaltfall F3 erfolgt ein periodisches Ein- und Ausschalten des steuerbaren Schaltelements 25 durch die Steuereinheit 20, wobei bei jedem Einschalten ein Strompuls auftritt. Die Stromhöhe jedes zeitlich folgenden Strompulses nimmt ab, während gleichzeitig die Spannung U₁₀ über dem Kondensator 10K der Lastanordnung 10 sukzessive zunimmt. Beispielhaft unterschreitet der siebte Puls einen vorgegebenen Stromwert, der in der Steuereinheit 20 hinterlegt ist, wobei hier von einem vollständigen Aufladen des Kondensators 10K der Lastanordnung 10 ausgegangen wird. Das steuerbare Schaltelement 25 wird durch die Steuereinheit 20 nun dauerhaft leitend geschaltet, wobei sich keine wesentliche Änderung der Spannung U₁₀ mehr ergibt.

Der vierte Einschaltfall F4 zeigt eine hierzu ähnliche Situation, wobei ein gestuftes Einschalten, zum Beispiel nach in der Steuereinheit 20 hinterlegten Profilen erfolgt. Insbesondere ist die Impulsdauer der Ladepulse variiert, wobei die Impulsdauer mit jedem weiteren Puls verlängert wird. Hierdurch kann der Verlauf der Spannung U₁₀ am Kondensator 10K der Lastanordnung (d. h. die Laderampe) in einer gewünschten Weise beeinflusst werden. Mit jedem verlängerten Strompuls wird gleichzeitig die Höhe des durch das steuerbare Schaltelement 25 fließenden Stroms kleiner.

## Patentansprüche

1. Verfahren zum Einschalten einer kapazitiven Lastanordnung (10) an ein Gleichstromnetz (1), wobei die Lastanordnung (10) durch eine Steuereinheit (20) über ein steuerbares Schaltelement (25) mit einem Versorgungspotential des Gleichstromnetzes (1) verbindbar ist, bei dem
- das steuerbare Schaltelement (25) durch die Steuereinheit (20) periodisch ein- und ausgeschaltet wird;
- mittels einer Strommesseinrichtung (26) die Höhe der während einer jeweiligen Einschaltphase des steuerbaren Schaltelements (25) durch das steuerbare Schaltelement (25) fließenden Strompulse erfasst wird;
- die zeitliche Entwicklung der Höhe von zumindest zwei unmittelbar aufeinanderfolgenden Strompulsen durch die Steuereinheit (20) ausgewertet wird; und
- das steuerbare Schaltelement (25) durch die Steuereinheit (20) weiter periodisch ein- und ausgeschaltet wird, wenn eine vorbestimmte Änderung in der zeitlichen Entwicklung der Höhe der zumindest zwei aufeinanderfolgenden Strompulse ermittelt wird.

2. Verfahren nach Anspruch 1, bei dem das steuerbare Schaltelement (25) durch die Steuereinheit (20) periodisch ein- und ausgeschaltet wird, bis die Höhe eines Strompulses einen vorgegebenen Stromwert unterschreitet.

3. Verfahren nach Anspruch 2, bei dem das steuerbare Schaltelement (25) durch die Steuereinheit (20) nach Erreichen des vorgegebenen Stromwerts dauerhaft leitend geschaltet wird.

4. Verfahren nach einem der vorhergehenden Ansprüche, bei dem das steuerbare Schaltelement (25) durch die Steuereinheit (20) sperrend geschaltet wird, wenn die vorbestimmte Änderung in der zeitlichen Entwicklung der Höhe der zumindest zwei unmittelbar aufeinanderfolgenden Strompulse nicht ermittelt wird.

5. Verfahren nach Anspruch 4, bei dem das steuerbare Schaltelement (25) durch die Steuereinheit (20) sperrend geschaltet wird, wenn in der zeitlichen Entwicklung der Höhe der zumindest zwei unmittelbar aufeinanderfolgenden Strompulse eine gleiche oder eine nahezu gleiche Höhe der Strompulse ermittelt wird.

6. Verfahren nach einem der vorhergehenden Ansprüche, bei dem zusätzlich mittels einer Spannungsmesseinrichtung die über der Lastanordnung (10) abfallende Spannung erfasst und die zeitliche Entwicklung der Spannung während der zumindest zwei aufeinanderfolgenden Strompulse durch die Steuereinheit (20) ausgewertet wird.

7. Verfahren nach einem der vorhergehenden Ansprüche, bei dem die Dauer der Strompulse durch die Steuereinheit (20) variiert wird.

8. Verfahren nach Anspruch 7, bei dem die Dauer der Strompulse in der zeitlichen Abfolge verlängert wird.

9. Computerprogrammprodukt, das direkt in den internen Speicher einer digitalen Steuereinheit (20) geladen werden kann und Softwarecodeabschnitte umfasst, mit denen die Schritte gemäß einem der vorhergehenden Ansprüche ausgeführt werden, wenn das Produkt auf der Steuereinheit (20) läuft.

10. Vorrichtung zum Einschalten einer kapazitiven Lastanordnung (10) an ein Gleichstromnetz (1), umfassend:
- eine Steuereinheit (20);
- ein steuerbares Schaltelement (25), das durch die Steuereinheit (20) ein- und ausschaltbar ist;
- eine Strommesseinrichtung (26), die dazu ausgebildet ist, die Höhe des durch das steuerbare Schaltelement (25) fließenden Strom zu erfassen;
wobei die Steuereinheit (20) dazu ausgebildet ist,
- das steuerbare Schaltelement (25) mittels eines Steuersignals (STS) periodisch ein- und auszuschalten;
- während einer jeweiligen Einschaltphase des steuerbaren Schaltelements (25) von der Strommesseinrichtung (26) eine die Höhe der durch das steuerbare Schaltelement (25) fließenden Strompulse repräsentierende Stromhöheninformation (SI) zu empfangen;
- die zeitliche Entwicklung der Stromhöheninformation (SI) von zumindest zwei aufeinanderfolgenden Strompulsen auszuwerten; und
- das steuerbare Schaltelement (25) weiter periodisch ein- und auszuschalten, wenn eine vorbestimmte Änderung in der zeitlichen Entwicklung der Stromhöhe der zumindest zwei aufeinanderfolgenden Strompulse ermittelt wird.

11. Vorrichtung nach Anspruch 10, die ferner zur Durchführung der Schritte des in den Ansprüchen 2 bis 9 angegebenen Verfahrens ausgebildet ist.
